# FASCICULE DE BREVET EUROPEEN

(11) **EP 3 274 650 B1**
(45) Date de publication et mention de la délivrance du brevet: **20.03.2019**
(21) Numéro de dépôt: 16717423.4
(22) Date de dépôt: 24.03.2016
(51) Int. Cl.: G01B 5/06, G01B 5/207

(54) **PROCÉDÉ ET APPAREIL DE MESURE D'ÉPAISSEUR D'UNE PAROI D'UN RÉCIPIENT TEL QU'UN POT DE YAOURT**
VERFAHREN UND VORRICHTUNG ZUM MESSEN DER DICKE EINER WAND EINES BEHÄLTERS WIE ETWA EINES JOGHURTBECHERS
METHOD AND APPARATUS FOR MEASURING THE THICKNESS OF A WALL OF A CONTAINER SUCH AS A YOGHURT CUP

(30) Priorité: 27.03.2015 FR 1552597
(43) Date de publication de la demande: 31.01.2018
(73) Titulaire: Compagnie Gervais Danone, 75009 Paris (FR)
(72) Inventeur: BEAL, Cédric, 74140 Messery (FR); PROVENAZ, Pascal, 74200 Thonon Les Bains (FR)
(74) Mandataire: Cabinet Plasseraud
(86) Numéro de dépôt international: PCT/FR2016/050649
(87) Numéro de publication internationale: WO 2016/156701

(56) Documents cités:
- EP-A2- 2 112 458
- FR-A1- 2 988 846
- US-A- 5 345 309
- US-B1- 6 860 025

## Description

### DOMAINE TECHNIQUE DE L'INVENTION

La présente invention se rapporte au domaine des récipients à paroi mince et typiquement flexible, produits pour des applications de grande consommation. Plus précisément, elle concerne un procédé et un appareil de mesure d'épaisseur d'une paroi d'un récipient creux tel qu'un pot de yaourt. L'invention concerne également un procédé de fabrication de récipients creux avec un contrôle utilisant le procédé de mesure d'épaisseur.

### ARRIERE-PLAN TECHNOLOGIQUE DE L'INVENTION

On rencontre des récipients à paroi mince notamment dans le domaine de l'agro-alimentaire, par exemple pour l'emballage de produits laitiers ou autres produits alimentaires (solides, liquides ou semi-liquides). De tels récipients peuvent présenter un fond formant de préférence une base plane et une paroi latérale qui s'étend longitudinalement depuis le fond jusqu'à une ouverture axiale permettant d'accéder au contenant. Pour des récipients à paroi mince, le fait de pouvoir mesurer efficacement l'épaisseur, de manière non destructive, peut permettre de minimiser les risques de perte et contamination du contenant. Les récipients, en particulier les pots thermoformés, peuvent être soumis à des contraintes de transport (par exemple conditionnement en palette avec nécessité d'une résistance suffisante à la compression verticale) et une réduction trop forte de l'épaisseur dans le corps du récipient creux cause généralement des problèmes : soit pendant le transport jusqu'au magasin, soit pendant les manipulations par le consommateur.

Plus généralement, il est utile de pouvoir contrôler la répartition des épaisseurs d'un récipient creux, ce qui peut permettre de garantir la qualité de ce récipient. L'utilisation de parois minces, avec des épaisseurs typiquement inférieures à 0,5 mm, et de préférence inférieures ou égales à 0,25 mm, permet un gain de matière. Avec un matériau étiré par thermoformage, on comprend qu'une paroi latérale d'un tel récipient présente une certaine flexibilité au moins dans le sens radial.

Il est connu des méthodes de mesure d'épaisseur par utilisation de capteurs optiques qui permettent de réaliser des mesures sans contact. Si de telles méthodes offrent une bonne précision, elles présentent un champ d'application réduit car elles sont inadaptées pour des corps opaques.

On connaît également des méthodes de mesure d'épaisseur s'effectuant par un seul côté (méthode de mesure unilatérale) qui utilisent un capteur capacitif. L'utilisation d'un capteur capacitif présente cependant un manque de flexibilité car le ou les matériaux constitutifs du récipient à inspecter peuvent varier. De plus, il faut réaliser la mesure dans un environnement sec.

On connaît, par le document US 6 860 025, une méthode de mesure bilatérale pour déterminer l'épaisseur d'une paroi tubulaire d'un récipient à goulot. L'appareil utilisé réalise une mesure (en pratique, évidemment dans un état non rempli du récipient) entre une tige mobile dont l'extrémité vient en contact avec l'extérieur de la paroi tubulaire et une pointe en vis-à-vis, engagée contre la face intérieure de la paroi tubulaire. La tige mobile doit être pré-positionnée par l'opérateur pour être alignée avec la pointe. Ensuite, une première position d'avancée de la tige avec contact contre la pointe est détectée dans une configuration d'étalonnage (sans le récipient), puis une deuxième position d'avancée avec contact contre la paroi du récipient est détectée dans une configuration de mesure effective.

Avec ce type d'appareil, il n'est pas permis de collecter rapidement plusieurs mesures d'épaisseur dans des zones distinctes du récipient inspecté. En particulier, des ajustements par un opérateur sont nécessaires pour pouvoir cumuler des mesures dans plusieurs zones correspondant à des niveaux de hauteur différents du récipient.

Par ailleurs, l'appareil utilisé selon le document US 6 860 025 nécessite des interventions manuelles qui, de manière inhérente, rendent les mesures difficilement répétables (avec un risque significatif de dérive dans la mesure d'une usine de production à l'autre). C'est en particulier le cas lorsque le matériau du récipient creux à inspecter présente une certaine flexibilité. Par conséquent, l'appareil montré dans le document US 6 860 025 apparaît seulement adapté pour l'inspection de bouteilles en verre ou éventuellement en plastique à paroi rigide, généralement épaisse.

Il existe donc un besoin pour un procédé de mesure d'épaisseur efficace, réduisant les interventions manuelles susceptibles d'altérer la répétabilité des mesures.

### DESCRIPTION GENERALE DE L'INVENTION

La présente invention a pour but de pallier un ou plusieurs des inconvénients rencontrés dans l'art antérieur.

A cet effet, il est proposé selon l'invention décrite dans la revendication indépendante 1 un procédé de mesure d'épaisseur dans au moins une portion à inspecter d'un corps d'un récipient creux (destiné à être rempli par un contenant), tel qu'un pot de yaourt à paroi mince, le corps définissant un volume intérieur débouchant par une ouverture axiale, le procédé comprenant les étapes suivantes :
- récupération d'un récipient creux (par exemple pendant un procédé de fabrication d'une pluralité de récipients creux), le corps du récipient creux récupéré comprenant un fond à l'opposé de l'ouverture axiale et définissant une paroi latérale qui s'étend autour d'un axe longitudinal ;
- mise en contact du fond et/ou d'une face interne de la paroi latérale avec un support de contact (qui remplit tout ou partie du volume intérieur) ;
- détermination d'une épaisseur respectivement dans N zones distinctes de la portion à inspecter, par utilisation de N organes d'appui mobiles qui sont guidés chacun par un guide à orientation fixe placé dans l'un parmi le support de contact et une structure de recouvrement par l'extérieur du récipient creux, les N organes d'appui mobiles étant entraînés chacun en coulissement dans le guide vers :
   i) une première surface de contact définie par une butée destinée au contact avec le corps du récipient creux dans une configuration d'étalonnage sans récipient creux obtenue avant ou après l'étape de mise en contact, ce qui permet de détecter une première position d'avancée de l'organe d'appui mobile considéré ;
   ii) une deuxième surface de contact définie par le corps du récipient creux, dans une configuration de mesure effective lorsque le corps du récipient creux est encore en contact avec le support de contact, de préférence par emboîtement, ce qui permet de détecter une deuxième position d'avancée de l'organe d'appui mobile considéré, la deuxième position d'avancée étant représentative d'une épaisseur du corps du récipient creux par comparaison avec la première position d'avancée ;
- commande (en particulier commande automatique) du déplacement des N organes d'appui mobiles par une unité de contrôle, N étant un entier supérieur ou éventuellement égal à deux.

Grâce à ces dispositions, on peut réaliser la mesure de façon efficace et rapide (par exemple pour qualifier une ligne de production de récipients creux). La prédisposition des guides (qui ont une orientation fixe) permet de s'affranchir d'incertitudes liées à une intervention humaine pour le positionnement de capteur.

Lorsque le récipient présente une ouverture (typiquement unique) aussi large que la plus grande section de la paroi tubulaire, le support de contact peut permettre de définir une pluralité de butées fixes servant avantageusement à former des premières surfaces de contact respectives sur lesquelles viennent s'appuyer :
- les organes d'appui mobiles dans la configuration d'étalonnage d'une part ; et
- la face intérieure (de préférence appui à la fois par le fond et par la paroi latérale) du corps du récipient creux dans la configuration de mesure effective d'autre part.

Dans ce cas, le support de contact définit un étalon avec des dimensions en correspondance avec la face interne du corps du récipient creux, au moins dans la portion à inspecter.

Alternativement lorsque le récipient présente une section élargie par comparaison avec l'ouverture axiale (formant typiquement l'unique ouverture du récipient), le support de contact peut comporter tout ou partie des organes d'appui mobiles, tandis que la structure de recouvrement est configurée pour définir tout ou partie des butées formant les premières surfaces de contact respectives.

Grâce à une commande qui peut être commune (commande typiquement automatique) et à un guidage fixe pour déplacer les organes d'appui mobiles, les déplacements sont réalisés sans erreur ou dérive significative. Si on ajoute à cela le recours à l'étalonnage, on comprend que la méthode de mesure présente une très bonne répétabilité, typiquement avec un écart type qui peut être inférieur à 5 µm.

Dans des modes de réalisation préférés du procédé selon l'invention, on peut éventuellement avoir recours en outre à l'une et/ou à l'autre des dispositions suivantes :
- les N organes d'appui mobiles sont chacun déplacés sous l'effet d'un fluide pressurisé et exercent chacun sur le corps du récipient une force de contact régulée par un organe de rappel élastique et/ou un dispositif de régulation de la mise sous pression du fluide pressurisé ; cette régulation est avantageuse pour éviter que l'appui soit réalisé avec une force de contact supérieure à un seuil permettant l'écrasement de la portion de paroi inspectée, en particulier lorsque la portion à inspecter est réalisée dans une matière flexible.
- le récipient creux est dépourvu de goulot et présente une hauteur mesurée longitudinalement entre le fond et une extrémité supérieure, des mesures d'épaisseur du récipient creux étant réalisées à différents niveaux de hauteur par tout ou partie des N organes d'appui mobiles, N pouvant être un entier optionnellement supérieur ou égal à cinq ou à six (on peut donc récupérer automatiquement au moins cinq mesures d'épaisseur, ce qui peut déjà fournir une bonne représentation d'un profil d'épaisseur du corps suivant une section longitudinale).
- les différents niveaux de hauteur peuvent être espacés d'une distance longitudinale (mesurée parallèlement à l'axe longitudinal) inférieure ou égale à 20 mm et de préférence inférieure à 15 mm ; ainsi on obtient des mesures d'épaisseurs suffisamment rapprochées pour permettre de bien représenter la répartition des épaisseurs selon l'axe longitudinal du récipient creux. A titre d'exemple non limitatif, la distance longitudinale entre deux niveaux de hauteur successifs de mesure peut être supérieure ou égale à 5 mm.
- une première phase de détection de la deuxième position d'avancée est réalisée simultanément pour au moins deux zones appartenant au fond, en déplaçant simultanément au moins deux premiers organes d'appui mobiles des N organes d'appui mobiles (cela permet d'inspecter plusieurs zones du fond de façon particulièrement rapide sans déplacement du support de contact ou de la structure de recouvrement).
- des organes d'appui mobiles parmi les N organes d'appui mobiles, distincts des premiers organes d'appui mobiles, sont déplacés pour réaliser au moins une autre phase de détection de la deuxième position d'avancée pour une ou plusieurs zones appartenant à la paroi latérale (cela permet d'inspecter aussi la paroi latérale sans manipuler le récipient creux ni déplacer un élément de l'appareil de mesure).
- l'un au moins des N organes d'appui mobiles est déplacé avec un décalage temporel par rapport au déplacement des premiers organes d'appui mobiles (avec cette disposition, le ou les appuis dans les différentes zones inspectées sont réduits et on minimise ainsi les éventuelles interactions pouvant fausser la mesure).
- une deuxième phase de détection de la deuxième position d'avancée est réalisée simultanément pour deux zones proches du fond appartenant à la paroi latérale et situées plus près du fond que de l'ouverture axiale, en déplaçant simultanément deux deuxièmes organes d'appui mobiles des N organes d'appui mobiles.
- une troisième phase de détection de ladite deuxième position d'avancée est réalisée simultanément pour au moins deux zones distantes du fond appartenant à la paroi latérale et situées de préférence plus près de l'ouverture axiale que du fond, en déplaçant simultanément au moins deux troisièmes organes d'appui mobiles des N organes d'appui mobiles.
- la première phase de détection, la deuxième phase de détection et la troisième phase de détection sont actionnées de manière automatique par une commande unique (avec de tels déplacements initiés par une seule commande, on obtient rapidement des mesures réparties à différents niveau de hauteur sans la moindre difficulté d'ergonomie pour l'utilisateur qui n'a aucune intervention intermédiaire à faire tant que la configuration de mesure effective est maintenue).
- au moins une étape du procédé de fabrication est modifiée lorsque la deuxième position d'avancée est représentative d'une épaisseur du corps du récipient creux qui est inférieure à un seuil d'épaisseur prédéfini pour le procédé de fabrication (comme les résultats des mesures peuvent être collectés rapidement, la modification du procédé de fabrication est accélérée et les éventuels rejets de récipients sont minimisés).

Un autre objet de l'invention est de proposer un procédé de fabrication avec un contrôle de qualité amélioré.

A cet effet, il est proposé selon la revendication 6 un procédé de fabrication de récipients creux pourvus d'un corps destiné à être rempli par un contenant, par exemple des pots thermoformés, comprenant une étape de formage du corps en définissant un volume intérieur débouchant par une ouverture axiale, et dans lequel des mesures d'épaisseur du corps sont réalisées dans différentes zones du corps en suivant le procédé de mesure d'épaisseur selon l'invention.

Selon une particularité, le procédé de fabrication comprend :
- une étape de récupération d'un récipient creux après l'étape de formage ;
- une étape d'inspection du récipient creux récupéré au cours de laquelle les mesures d'épaisseur sont réalisées, comprenant un contrôle des mesures d'épaisseur en fonction d'un ou de plusieurs seuils prédéfinis ;
- lorsqu'au moins une épaisseur mesurée du corps du récipient récupéré est en dehors d'une gamme bornée par le ou lesdits seuils, une étape d'ajustement de l'étape de formage et/ou d'une étape antérieure à l'étape de formage afin de fabriquer des récipients creux dont le corps présente au moins une épaisseur modifiée par rapport au corps du récipient récupéré.

L'optimisation du procédé en cours de production devient ainsi possible, notamment grâce à la réduction du temps de mesure (par comparaison avec une méthode avec des mesures séquentielles utilisant une jauge de mesure d'épaisseur, nécessitant un ajustement de la part de l'opérateur pour chaque mesure bilatérale). On comprend que les interventions manuelles de l'opérateur sont réduites au minimum.

La section de l'ouverture des récipients est aussi large ou plus large qu'une section du corps, les récipients étant de préférence prévus sans goulot (pour d'une part limiter leur hauteur, et d'autre part simplifier et rendre plus rapide la fixation de la partie de fermeture). Bien entendu, le terme "section" doit être compris comme une section obtenue dans un plan de coupe transversal (plan horizontal lorsque le récipient est en élévation verticale), comme c'est l'habitude dans le domaine ici considéré.

Le procédé de fabrication avec formage peut être de type FFS ou utilisant une technologie (de type « open mold ») à ouverture du moule au moment du démoulage.

L'invention vise aussi à obtenir un appareil de mesure d'épaisseur particulièrement bien adapté pour récupérer rapidement des informations représentatives de la répartition des épaisseurs dans le corps d'un récipient creux, avec une précision des mesures satisfaisante.

A cet effet, il est proposé selon la revendication 7 un appareil de mesure d'épaisseur pour la mise en oeuvre du procédé selon l'invention, permettant des mesures d'épaisseur d'un récipient creux ayant un corps avec un format déterminé pourvu d'un fond et d'une paroi latérale, l'appareil comprenant :
- un support de contact (dont les dimensions externes sont en correspondance avec le format déterminé du corps) destiné à s'emboîter dans le volume intérieur du récipient creux, le support de contact présentant une extrémité libre ; et
- un ensemble de détection de position comprenant au moins un organe d'appui mobile qui est :
   i) mobile jusqu'à une première position d'avancée définie par une butée dans une configuration d'étalonnage de l'appareil de mesure ; et
   ii) adapté pour venir en appui, dans une configuration de mesure effective de l'appareil de mesure, contre le corps du récipient creux, de façon à définir une deuxième position d'avancée représentative d'une épaisseur du corps du récipient creux par comparaison avec la première position d'avancée ;
- une structure de recouvrement (s'étendant entièrement à l'extérieur du récipient creux dans la configuration de mesure effective) qui délimite avec le support de contact un espacement prédéterminé dans la configuration d'étalonnage et la configuration de mesure effective, cet espacement prédéterminé étant destiné à recevoir une portion à inspecter du corps du récipient creux, dans la configuration de mesure effective lorsque le corps du récipient creux est emboîté sur le support de contact, l'ensemble de détection de position comprenant :
- N organes d'appui mobiles guidés chacun par un guide à orientation fixe placé dans l'un parmi le support de contact et la structure de recouvrement, chacun des N organes d'appui étant entraîné en coulissement dans le guide vers l'espacement déterminé dans la configuration d'étalonnage et dans la configuration de mesure effective ;

Selon une particularité, l'ensemble de détection comprend en outre :
- N butées en correspondance avec la course desdits N organes d'appui mobiles pour définir respectivement ladite première position d'avancée ; et
- une unité de contrôle pour commander (automatiquement de préférence) le déplacement des N organes d'appui mobiles, N étant un entier supérieur ou égal à deux.

On obtient ainsi un appareil de mesure ergonomique et dont la complémentarité entre la structure de recouvrement et le support de contact permettent de prédisposer plusieurs zones de mesure d'épaisseur.

Dans des modes de réalisation préférés de l'appareil de mesure selon l'invention, on peut éventuellement avoir recours en outre à l'une et/ou à l'autre des dispositions suivantes :
- l'un des N organes d'appui mobiles est placé à une plus grande distance de l'extrémité libre du support de contact qu'un autre des N organes d'appui mobiles.
- la structure de recouvrement présente une première face qui s'étend parallèlement à un premier plan pour recouvrir une face externe du fond et une deuxième face qui s'étend depuis une extrémité proche de ou reliée à la première face jusqu'à une portion éloignée du premier plan.
- au moins un organe d'appui déterminé des organes d'appui mobiles est monté coulissant selon une direction perpendiculaire au premier plan et configuré pour permettre une mesure d'épaisseur du fond du corps, l'extrémité libre du support de contact présentant une butée déterminée parmi les N butées qui est en correspondance avec la course de l'organe d'appui déterminé pour définir la première position d'avancée de l'organe d'appui déterminé.

- au moins deux des N butées sont fixes et prédisposées en fonction du format déterminé du corps du récipient creux, de sorte que chacune de ces deux butées forme un appui localisé dans ladite portion à inspecter (ceci permet de définir un étalon, avec un profil de butées qui correspond au profil de la face interne de la portion à inspecter).
- le support de contact peut porter les butées fixes ou les organes d'appui mobiles.
- l'appareil comprend une interface de montage pourvue d'un organe de butée et reliée à la structure de recouvrement, l'interface de montage étant configurée pour déplacer le support de contact, de préférence par l'intermédiaire d'un chariot coulissant, entre une position distante de la structure de recouvrement et une position proximale dans laquelle le support de contact est bloqué par l'organe de butée, sachant que la configuration d'étalonnage et la configuration de mesure effective sont obtenues lorsque le support de contact est dans la position proximale (l'utilisation d'une telle interface de montage minimise les manipulations du récipient).
- les N organes d'appui mobiles sont répartis dans un même plan longitudinal parallèle à un axe longitudinal du récipient creux dans la configuration de mesure effective.
- lorsque le récipient creux présente une symétrie de révolution et/ou des génératrices identiques sur plusieurs portions décalées angulairement, le support de contact peut être monté mobile en rotation, de sorte que plusieurs séries de mesures peuvent être réalisées dans au moins deux portions à inspecter de même profil longitudinal espacées angulairement l'une par rapport à l'autre (le cas échéant le nombre de butées fixes peut alors être supérieur au nombre d'organes d'appui mobiles, par exemple 2N, 3N ou 4N si on prévoit une, deux ou trois rotations respectives de 90°) ; de préférence, le support de contact peut être disposé sur un chariot mobile pour déplacer le support de contact à distance de la structure de recouvrement, la rotation du support pouvant alors être effectuée avant de repositionner le support de contact dans l'une parmi la configuration d'étalonnage et la configuration de mesure effective (cette disposition permet de minimiser le nombre de capteurs et/ou de ne pas augmenter le nombre d'organes d'appui mobiles ; une information représentative de la position angulaire du support de contact peut être transmise à l'unité de contrôle pour différencier les mesures et ainsi identifier chaque zone étudiée dans les portions à inspecter).
- l'unité de contrôle est configurée pour commander simultanément le déplacement d'au moins deux des N organes d'appui mobiles, respectivement dans la configuration d'étalonnage et dans la configuration de mesure effective.
- le récipient creux présente une collerette annulaire raccordée au corps et définissant quatre côtés, l'interface de montage présentant au moins deux éléments de guidage en position pour guider au moins deux côtés opposés des quatre côtés de la collerette (cet agencement permet de s'assurer d'une parfaite mise en place du récipient creux par rapport au support de contact et/ou à la structure de recouvrement).
- chacun des N organes d'appui mobiles comprend une tige de mesure typiquement sollicitée vers une position de retrait par un organe de rappel élastique et montée coulissante dans un guide communiquant avec une source de pression pneumatique commandée par l'unité de contrôle (avec un capteur dont la partie mobile est déplacée à l'encontre d'une force de rappel élastique, par exemple exercée par un soufflet ou ressort fonctionnellement similaire, on peut éviter efficacement d'écraser localement la paroi à inspecter, la force de contact pouvant être ajustée en réglant de façon approprié la pression utilisée pour le déplacement de l'organe d'appui mobile).
- chaque guide à orientation fixe est monté dans la structure de recouvrement qui forme une arche. Avec cette disposition, lorsque la structure de recouvrement est fixe, il est aisé de guider le récipient (par exemple avec des surface de guidage correspondant au format d'une collerette ou autre surface externe définie par le récipient) et de verrouiller la position du support de contact sous la structure (par exemple en faisant buter un dispositif chargeur porteur du support de contact contre un montant de l'arche).

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue schématique d'un appareil de mesure d'épaisseurs conforme à l'invention ;
- la figure 2 illustre l'agencement d'une portion à inspecter de récipient, avec une zone mesurée disposée entre une butée et un organe d'appui déplaçable jusqu'à une position d'avancée représentative de l'épaisseur ;

- les figures 3A et 3B illustrent respectivement deux exemples différents de support de contact, pouvant être utilisés pour la mise en oeuvre du procédé de mesure d'épaisseurs selon l'invention ;
- la figure 4 montre un logigramme illustrant un exemple d'utilisation du procédé de mesure d'épaisseurs en cours de production ;
- la figure 5 est une vue en perspective illustrant une position distante du support de contact par rapport à la structure de recouvrement, permettant la mise en place du récipient creux ;
- la figure 6 est une vue de côté qui illustre la configuration d'étalonnage, avec étalonnage d'une partie des capteurs.

### DESCRIPTION DES MODES DE REALISATION PREFERES DE L'INVENTION

Sur les différentes figures, des références identiques indiquent des éléments identiques ou similaires.

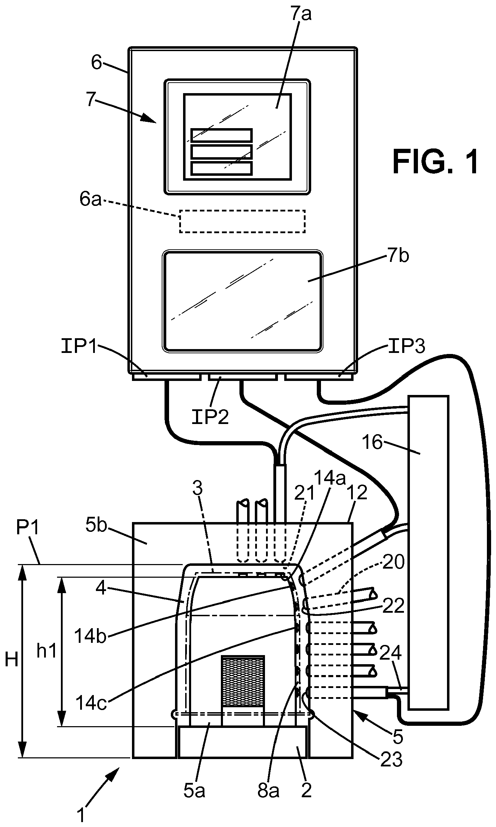

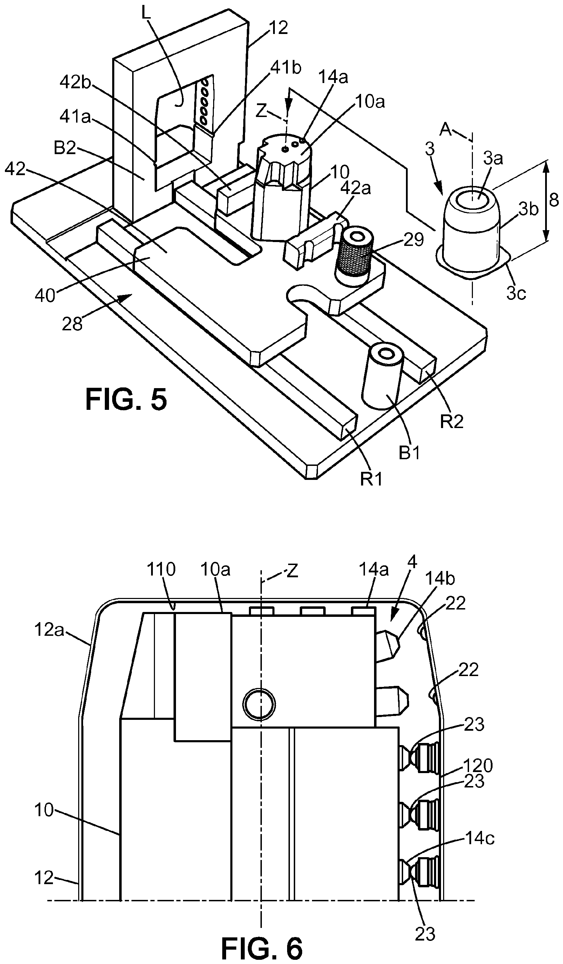

En référence aux figures 1 et 5, l'appareil 1 de mesure d'épaisseurs présente un dispositif chargeur 2 pour charger un récipient creux 3 dans un espacement prédéterminé 4 formé entre deux parties 5a, 5b d'un ensemble 5 de détection de position. Le récipient creux 3 possède un corps 8 avec un format déterminé et délimitant un volume intérieur. Ce volume intérieur permet par exemple de recevoir un contenant versé sur un fond 3a et maintenu dans le volume intérieur par une paroi latérale 3b qui est typiquement étanche aux liquides.

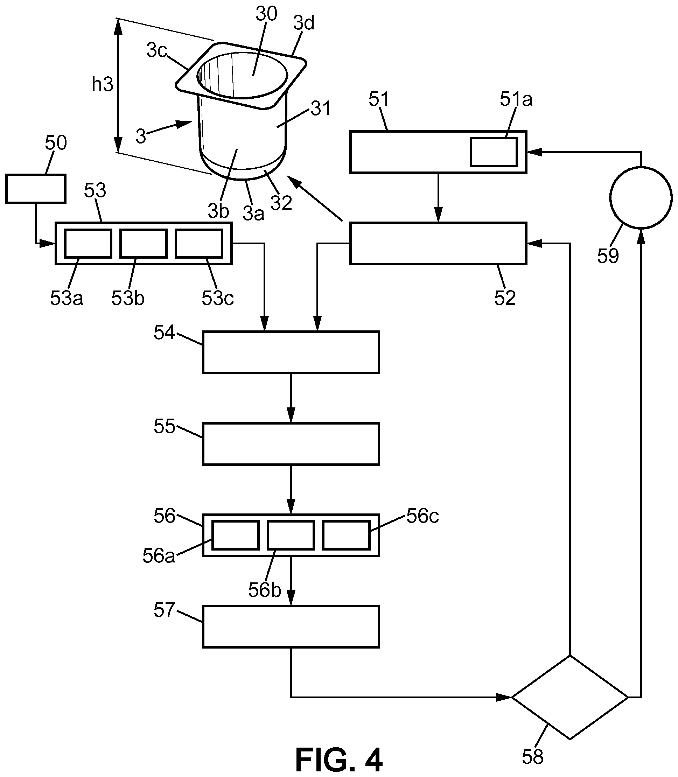

Lorsque le récipient creux 3 définit un pot de yaourt, il peut en outre présenter une collerette annulaire 3c qui s'étend autour d'une ouverture axiale 30 du récipient creux 3, bien visible sur la figure 4. Le récipient creux 3 est alors du type sans goulot avec une ouverture de large section, ayant typiquement un diamètre Dint supérieur à 40 mm, de préférence supérieur ou égal à 45 mm. Le fait d'avoir une ouverture suffisamment large est important pour la cadence de remplissage des pots de yaourt et pour permettre de récupérer facilement le contenu alimentaire avec une cuillère. Le récipient creux 3 est réalisé à base d'une matière plastique qui convient au contact avec un produit alimentaire, en particulier un produit laitier.

Dans un mode de réalisation préféré, une même feuille de plastique définit le matériau pour former le fond 3a, la paroi latérale 3b et la collerette 3c. Seule la collerette 3c a une épaisseur (sensiblement constante) égale à l'épaisseur de la feuille de plastique.

Plus généralement, le récipient creux 3 peut correspondre à tout type de récipient, récupéré par exemple sous la forme d'un échantillon prélevé sur une ligne de production.

Une unité de contrôle 6, qui présente ici une interface utilisateur 7 avec par exemple un écran de commande tactile 7a et un écran d'affichage 7b permettant de visualiser des résultats, est connectée à l'ensemble 5 de détection de position. L'unité de contrôle 6 est configurée pour commander de façon automatique l'ensemble 5 de détection de position et pour collecter des données de mesure de position. L'unité de contrôle 6 peut disposer d'au moins un module 6a de gestion de l'ensemble 5 adapté pour recevoir des commandes d'utilisateur en provenance de l'interface utilisateur 7. Bien entendu, l'unité de contrôle 6 peut se présenter sous toute autre forme adaptée, le cas échéant avec un clavier, une souris, un terminal de télécommande ou tout autre organe de pilotage. Ainsi, le terme « automatique » ne signifie pas qu'il n'y a aucune intervention humaine possible au cours d'un cycle de détection de la position de capteurs (par exemple une ou plusieurs interventions via une interface homme-machine). Ce terme sert ici plutôt à indiquer que le mode de détection pour déterminer les épaisseurs est insensible à l'aléas humain (typiquement pas de manipulation qui fausserait la détection ou rendrait les mesures difficilement répétables).

Dans le mode de réalisation représenté sur les figures 1, 3A et 5, le corps 8 du récipient creux 3 est mis en place sur un support de contact 10 destiné à s'emboîter dans le volume intérieur du récipient creux 3. Ce support de contact 10 définit ainsi une projection d'insertion de l'ensemble 5 dans le volume intérieur du récipient 3. L'extrémité libre 10a du support de contact 10 est par exemple en contact avec une ou plusieurs zones de surface intérieure du fond 3a, lorsque le corps 8 a été mis en place. Le support de contact 10 appartient à une première partie 5a de l'ensemble 5 de détection de position.

Des capteurs sont répartis dans l'ensemble 5 de détection de position, de préférence dans la deuxième partie 5b de l'ensemble 5. Ici, cette deuxième partie 5b est en forme d'arche et appartient à une structure 12 de recouvrement, qui recouvre par l'extérieur une portion à inspecter 8a du corps 8 du récipient creux 3, lorsque l'appareil est dans la configuration de mesure effective comme illustré sur la figure 1.

L'ensemble 5 de détection de position comporte plusieurs capteurs qui sont ici actionnés par poussée, par exemple neuf capteurs. La poussée est typiquement pneumatique mais d'autres solutions d'entraînement (poussée par ressort notamment) peuvent être utilisées dans des variantes de réalisation. Pour chaque capteur, il est prévu une butée 14a, 14b, 14c, ici fixe, qui vient en appui d'un côté de la portion à inspecter 8a et un organe d'appui mobile 21, 22, 23, entraîné en coulissement dans un guide 20 à orientation fixe. Chaque guide 20 peut être monté fixement dans la structure 12 de recouvrement.

Les organes d'appui mobiles 21, 22, 23 sont optionnellement répartis dans un même plan longitudinal parallèle à un axe longitudinal Z du support de contact 10, sachant que cet axe longitudinal Z peut coïncider sensiblement avec l'axe longitudinal A du récipient creux 3 dans la configuration de mesure effective. Cette disposition permet de collecter des mesures d'épaisseur selon une répartition dans le sens longitudinal, ce qui est intéressant notamment pour se rendre compte d'un écart d'épaisseur anormal qui peut rendre le récipient creux 3 moins résistant à une charge de compression verticale.

L'unité de contrôle 6 peut être reliée à un bloc d'électrovannes 16 ou moyens d'actionnement similaires, pour permettre de délivrer une force de poussée sur les parties de capteurs montées de manière coulissante dans les guides 20 et ainsi déplacer les organes d'appui mobile 21, 22, 23. L'ensemble 5 de détection de position permet de définir au moins un espacement prédéterminé 4 lorsque le dispositif chargeur 2 est dans une position d'engagement avec la structure 12 de recouvrement ou une position prédéfinie analogue proximale par rapport à la structure 12 de recouvrement. La ou les portions à inspecter 8a s'étendent dans un tel espace prédéterminé 4, dans une configuration de mesure effective de l'appareil 1.

En référence à la figure 6, une configuration d'étalonnage est représentée. Cette configuration d'étalonnage diffère notamment de la configuration de mesure effective représentée sur la figure 1 en ce que le récipient creux 3 n'a pas été chargé. Cependant, le support de contact 10 occupe la même place que lors de la configuration de mesure effective et peut constituer un étalon à l'aide des butées 14a, 14b, 14c. Dans des variantes de réalisation, d'autres séries de butées peuvent être prévues sur le support de contact 10, ce qui peut permettre d'obtenir davantage de mesure, éventuellement sans augmenter le nombre d organes d'appui mobile 21, 22, 23 lorsqu'un pivotement prédéfini du support de contact 10 est permis (le récipient 3 étant rendu solidaire en rotation de ce support de contact 10).

La configuration d'étalonnage est obtenue typiquement après blocage du dispositif chargeur 2 dans sa position d'engagement et/ou proximale relativement à la structure 12 de recouvrement. L'espace prédéterminé 4 s'étend alors entre une face intérieure 12a (ou optionnellement plusieurs faces intérieures espacées) de la structure 12 de recouvrement et le support de contact 10. Lorsque la structure 12 de recouvrement définit une arche, tout ou partie de l'extrémité libre 10a du support de contact 10 peut s'étendre sous l'arche. On comprend que l'espacement prédéterminé 4 est ainsi bordé (sur deux côtés opposés) par les parties 5a et 5b complémentaires de l'ensemble 5 de détection de position.

Lorsque l'on souhaite mesurer des épaisseurs à la fois pour le fond 3a et la paroi latérale 3b, la structure 12 de recouvrement peut présenter une première face 110 qui s'étend parallèlement à un premier plan P1 pour recouvrir une face externe du fond 3a et une deuxième face 120 qui s'étend jusqu'à une portion éloignée du premier plan P1. Dans l'exemple illustré sur la figure 1, le ou les organes d'appui mobiles 21 prévus pour l'appui contre le fond 3a se déplacent selon une direction longitudinale perpendiculaire au premier plan P1. La ou les butées 14a en correspondance peuvent définir tout ou partie de l'extrémité libre 10a du support de contact 10.

Si comme dans le cas de la figure 5, les mesures d'épaisseur pour le fond 3a ne sont pas prévues, on peut évidemment supprimer la première face 110 (la structure 12 de recouvrement peut ainsi se présenter sous d'autres formes que celles représentées).

Dans une variante de réalisation, la structure 12 de recouvrement peut être formée en plusieurs parties distinctes. En outre, la structure 12 de recouvrement peut présenter optionnellement une ou une plusieurs partie mobiles pour permettre la mise en place et l'enlèvement du récipient creux 3. Dans ce cas, le dispositif chargeur 2 qui porte le support de contact 10 peut être remplacé par un système stationnaire. Bien que les formes de réalisation illustrées (notamment en figure 5) montrent que la mise en place et l'enlèvement du récipient creux 3 sont rendus possibles par un dégagement complet au dessus et en périphérie du récipient creux 3 dans un état renversé verticalement, on comprend que la mobilité relative entre le support de contact 10 et la structure 12 de recouvrement peut être réalisée différemment (par exemple avec un assemblage de deux sections venant se superposer de façon verticale, avec seulement une des sections qui est mobile verticalement, ou encore en utilisant une section qui pivote par rapport à l'autre).

Plusieurs postes de capteurs peuvent être définis, avec la possibilité d'actionner simultanément deux organes d'appui mobiles 21, 22, 23 pour au moins un des postes. L'unité de contrôle 6 peut présenter des interfaces de connexion IP1, IP2, IP3 avec les capteurs d'un même poste, par exemple pour grouper des mesures par poste. La figure 6 montre que les organes d'appui mobiles 23 associés à une même interface de connexion (en l'occurrence l'interface de connexion IP3 visible sur la figure 1) peuvent signaler plusieurs positions différentes de façon simultanée pour réduire le temps d'étalonnage. On comprend que l'étalonnage peut être réalisé avec plusieurs phases de détection de position par l'ensemble 5 de détection de positon (i.e. avec un décalage temporel entre des séries de mesure, la figure 6 illustrant typiquement une dernière phase de détection précédée de deux autres phases détection). Ceci est permis par la commande centralisée depuis l'unité de contrôle 6. La décomposition en différentes phases de détection peut être la même dans la configuration de mesure effective.

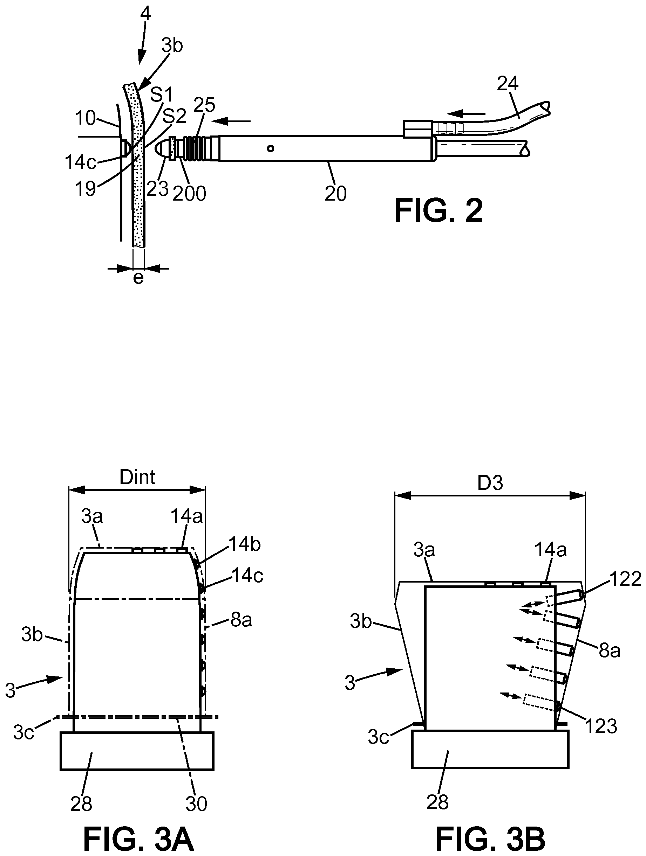

En référence à présent à la figure 2, on peut voir qu'une poussée pneumatique est bien adaptée pour déplacer un organe d'appui mobile 23 jusqu'à une position d'avancée avec appui contre une face, ici une face externe, du corps 8 dans une zone d'inspection 19. Pour un récipient creux 3 de type pot de yaourt en matière plastique étirée par thermoformage, l'épaisseur e mesurée peut correspondre au cumul de l'épaisseur d'une couche interne qui inclut du gaz, de l'épaisseur d'une croûte interne plus mince et de l'épaisseur d'une croûte externe sensiblement aussi mince que la croûte interne. Du fait de cette structure de paroi, il existe un risque d'écraser la couche interne si la force de contact de l'organe d'appui mobile 23 dépasse un seuil.

Avec un capteur à poussée, il est permis de réguler la force poussée pour ne pas dépasser un tel seuil, par exemple en ayant une force de poussée inférieure à 0,1 ou 0,2 Newton. Un capteur de métrologie pneumatique est par exemple approprié. De l'air ou fluide pressurisé similaire peut alors être insufflé par une ouverture d'électrovanne et circuler dans un tuyau 24 raccordé à un tube formant le guide 20. Le canal défini par ce guide 20 communique avec une source de pression pneumatique commandée par l'unité de contrôle 6. Un organe de rappel élastique 25, par exemple sous la forme d'un soufflet, peut être utilisé pour réduire la force de poussée. A titre d'exemple non limitatif, l'organe d'appui mobile 23 peut être situé à l'extrémité d'une tige de mesure 200 qui est maintenue par défaut dans une position de retrait au moins par l'organe de rappel élastique 25 et montée coulissante dans le guide 20. On comprend que l'appareil 1 peut être adapté pour une grande variété de parois (en matière opaque, transparent, compressible).

Tandis que dans la configuration d'étalonnage, l'organe d'appui mobile 23 est déplacé jusqu'à une première position d'avancée définie par la butée 14c, celui-ci est déplacé avec une moindre amplitude dans la configuration de mesure effective, jusqu'à une deuxième position d'avancée représentative (par comparaison avec la première position d'avancée) de l'épaisseur e dans la zone correspondante de la portion à inspecter 8a.

Selon le mode de réalisation des figures 1 et 6, neufs organes d'appui mobiles 21, 22, 23 sont représentés et configurés pour réaliser des mesures à la fois pour le fond 3a et pour la paroi latérale 3b du récipient creux 3. Plus généralement, un nombre N quelconque d'organes d'appui mobiles 21, 22, 23 peut être utilisé, N étant un entier supérieur ou égal à deux, de préférence supérieur ou égal à quatre. On comprend également que l'appareil 1 peut réaliser selon une option seulement des mesures d'épaisseur dans la paroi latérale 3b, comme illustré dans la variante de réalisation de la figure 5 (avec retrait des capteurs pour la mesure d'épaisseur dans le fond 3a).

Par ailleurs, l'appareil 1 peut présenter un nombre variable de capteurs, être configuré avec des répartitions différentes de capteurs (optionnellement uniquement pour mesurer le fond et/ou pour réaliser des mesures dans des portions à inspecter diamétralement opposées ou angulairement décalées en suivant un agencement de butées 14a, 14b, 14c prédisposées sur le support de contact 10).

Comme bien visible sur la figure 3A en particulier, chacune des butées 14a, 14b, 14c peut être prédisposée en fonction du format de la portion à inspecter 8a du corps 8. Ainsi sans ajustement, les butées 14a, 14b, 14c, viennent en contact avec le corps 8 du récipient creux 3. On comprend que toutes les butées 14a, 14b, 14c, ici sous la forme de plots stationnaires, sont simultanément en contact avec le côté intérieur de la portion à inspecter 8a, au moins tant que le récipient creux 3 est chargé dans la configuration de mesure effective. Le support de contact 10 peut optionnellement inclure une partie périphérique ou une section télescopique qui est déplacée lors d'une étape préalable de paramétrage pour se conformer selon le profil de la portion à inspecter 8a dans le récipient creux 3. Des vis de réglage peuvent aussi optionnellement permettre certains ajustements en position des butées 14a, 14b, 14c avant une toute première mesure d'épaisseurs pour un nouveau format de récipient creux 3.

De manière similaire, l'orientation des guides 20 est adaptée en fonction de la série d'épaisseurs à mesurer (série typiquement représentative d'un profil longitudinal d'épaisseurs). Autrement dit, pour une application de contrôle qualité associé à une production en masse de récipients creux 3 définis, les butées 14a, 14b et 14c sont déjà prédisposées, la direction de la course des organes d'appui mobiles 21, 22, 23 est déjà définie dans l'alignement des butées 14a, 14b, 14c respectivement opposées et il est bien entendu qu'aucun ajustement particulier n'est requis en cours de production.

Comme bien visible sur la figure 5, pour faciliter la mise en place du récipient creux 3 et s'assurer du bon positionnement de ce récipient creux 3 dans l'espacement prédéterminé 4, l'appareil 1 peut présenter une interface de montage 28 qui comprend ici le dispositif chargeur 2, un ou plusieurs organes de butée B1, B2 et des éléments de guidage en position. Un élément de préhension 29 est prévu sur le dispositif chargeur 2 pour actionner et entraîner manuellement le déplacement du support de contact 10. Dans l'exemple représenté, ce déplacement est réalisé par coulissement sur un ou plusieurs rails R1, R2 ou moyens de guidage similaires. Alternativement, l'entraînement de ce type de déplacement peut être automatisé et initié par activation d'une commande, par exemple par appui sur une touche ou zone d'écran de l'interface utilisateur 7 (ou tout autre commande habituelle d'une interface IHM).

L'interface de montage 28 est reliée à la structure 12 de recouvrement et permet ici de déplacer le support de contact 10 par l'intermédiaire d'un chariot coulissant 40 qui forme la partie mobile du dispositif chargeur 2. La figure 5 illustre la position distante du chariot coulissant 40 par rapport à la structure 12 de recouvrement. Le logement L défini sous l'arche de la structure 12 de recouvrement permet de recevoir, typiquement avec un faible jeu, le récipient creux 3 engagé sur le support de contact 10.

Le récipient creux 3 peut présenter une collerette annulaire 3c raccordée au corps 8 et définissant quatre côtés. Selon une alternative, l'extrémité supérieure 3d présente un périmètre de format déterminé. L'interface de montage 28 présente ici des moyens pour guider en position le récipient creux 3 par un ou plusieurs contacts du côté de l'extrémité supérieure 3d, en prenant en compte un format de périmètre.

Des fentes de guidage 41a, 41b ou des éléments de guidage en position analogues sont prévues dans l'interface de montage 28, ici à proximité de la zone de mesure de la structure 12 de recouvrement. Des éléments de guidage 42a, 42b additionnels sont prévus de part et d'autre du support de contact 10, sur une face supérieure 42 du chariot 40.

On comprend que la collerette 3c qui définit ici un périmètre maximum du récipient creux 3 peut être bloquée en rotation entre les éléments de guidage 42a, 42b au moment de la mise en place du récipient creux 3 sur le support de contact 10. En effet, l'écartement entre les faces en vis-à-vis des éléments de guidage 42a, 42b peut correspondre à une première dimension de la collerette 3c. Puis lors du déplacement de l'ensemble support de contact 10 et récipient creux 3 vers la structure 21 de recouvrement pour obtenir la configuration de mesure effective, un centrage dans le logement L est permis par l'engagement de deux bords opposés de la collerette 3c dans les fentes de guidage 41a, 41b. De tels bords peuvent être rectilignes selon une option, ce qui permet de réaliser par exemple des packs de récipients creux 3 à jonction sécable rectiligne entre les collerettes 3c de deux récipients adjacents dans le pack. Ceci permet de former des rangées de récipients et facilite l'achat d'une pluralité de produits, par exemple alimentaires, conditionnés à l'aide des récipients creux 3.

Le chariot coulissant 40 vient s'appuyer sur l'organe de butée B2 pour bloquer une position proximale du support de contact 10 par rapport à la structure 12 de recouvrement. Avec un tel blocage, on s'assure que l'espace prédéterminé 4 reste identique d'une mesure à l'autre. Optionnellement, une butée auxiliaire (non représentée), par exemple formée par une projection mobile, peut être prévue pour empêcher tout retour du chariot coulissant 40 vers une position distante comme montré sur la figure 5, de sorte que le récipient creux 3 est maintenu dans une position fixe dans le logement L. Un organe de butée B1 peut aussi être formé sur l'interface de montage 28 pour limiter la course du chariot coulissant 40 dans la direction opposée au logement L

Bien entendu, la course et la mise en place du support de contact 10 dans le logement L peut être identique pour atteindre la configuration d'étalonnage sans recours au récipient creux 3.

Dans l'exemple non limitatif de la figure 5, le support de contact 10 peut former une projection saillante depuis la face supérieure 42, en définissant une hauteur h1 différente de la hauteur h3 du récipient 3, par exemple supérieure afin d'éviter tout contact perturbateur entre l'extrémité supérieure 3d du récipient creux 3 (qui se trouve ici dans un état renversé) et la face supérieure 42. Egalement, le corps 8 du récipient creux 3 est préférentiellement amené et placé dans un état non enserré dans l'espacement prédéterminé 4 entre le support de contact 10 et la structure 12 de recouvrement, afin d'éviter toute déformation de la portion de paroi 8a à inspecter.

A présent en référence à la figure 3B, on décrit une forme de réalisation du procédé de mesure d'épaisseurs qui convient à des récipients creux 3 pour lesquels la dimension caractéristique (diamètre Dint comme visible sur la figure 3A) de l'ouverture axiale 30 est inférieure à un diamètre maximal D3 ou dimension analogue de la paroi latérale 3b.

La forme de réalisation de la figure 3B montre des organes d'appui mobiles 122, 123 situés du côté intérieur du récipient creux 3, dans cet exemple au moins pour les mesures d'épaisseur qui concernent la paroi latérale 3b. Le montage des capteurs est ainsi renversé, au moins pour partie, par rapport au cas illustré sur les figures 1 et 3A. Des corps 8 avec un élargissement de section en se rapprochant du fond 3a peuvent être ainsi mis en place sur un support de contact 10, grâce à une position de retrait, non saillante, des organes d'appui mobiles 122, 123. Après la mise en place sur le support de contact 10 et l'obtention de la configuration de mesure effective, les organes d'appui mobiles 122, 123 sont déplacés vers l'espace prédéterminé 4 et viennent en contact avec la portion à inspecter 8a. Dans ce cas, les butées 14b et 14c peuvent être formées sur la structure 12 de recouvrement par l'extérieur. La structure 12 présente une conformation prédéfinie des butées 14b et 14c, qui sont par exemple fixes et sur lesquelles la portion à inspecter 8a vient s'accoler à la fin du chargement du récipient creux 3. Le principe d'étalonnage reste le même, sachant que :
- le support de contact 10 et les butées fixes 14a formées à l'extrémité libre 10a de ce support de contact 10 sont positionnés de façon identique entre la configuration d'étalonnage et la configuration de mesure effective ; et
- les autres butées fixes 14b, 14c solidaires de la structure 12 de recouvrement sont positionnées de façon identique entre la configuration d'étalonnage et la configuration de mesure effective.

Alternativement, la structure 12 de recouvrement peut être similaire à l'exemple de la figure 1, hormis l'adaptation géométrique au profil de la portion à inspecter 8a. Plus généralement, on comprend qu'il n'y a pas nécessairement de recours à des butées fixes 14b, 14c pour tout ou partie des mesures d'épaisseur de la paroi latérale 3b. Il en va de même pour les mesures d'épaisseur concernant le fond 3a.

Dans des variantes de réalisation pour un récipient creux 3 tel que montré sur la figure 3B, on peut utiliser une partie mobile de l'interface de montage 28 pour déplacer l'arche ou partie de mesure similaire de la structure 12 de recouvrement, tandis que le support de contact 10 reste stationnaire. Plus généralement, on comprend que ce qui a été décrit pour l'interface de montage 28 ou des parties de celle-ci en référence aux figures 1 et 5-6 peut s'appliquer pour des récipients creux 3 de format différent, moyennant des adaptations géométriques simples de l'un et/ou l'autre du support de contact 10 et de la structure 12 de recouvrement.

Un exemple de déroulement d'un procédé de mesure conforme à l'invention, dans un contexte de contrôle de qualité d'un procédé de fabrication de récipients creux 3, va à présent être décrit en référence aux figures 1 et 4-6.

Comme visible sur la figure 4, pendant un fonctionnement 51 d'une ligne de production de plusieurs récipients creux 3, une étape 52 de récupération d'un récipient creux formant un échantillon est réalisée pour récupérer un récipient creux 3 dans un état non rempli. Lorsque le corps 8 du récipient creux 3 est obtenu à l'issue d'une étape 51a de formage de matière plastique, on comprend que l'étape 52 de récupération est réalisée après cette étape 51a de formage.

Dans ce dernier cas, la matière plastique utilisée, notamment lorsque le récipient creux 3 définit un pot de yaourt, peut être transparente ou non. On comprend aussi que le récipient creux 3 peut être obtenu par thermoformage, extrusion soufflage, injection soufflage ou autre procédé similaire permettant une mise en forme avec étirage de la matière plastique. L'ouverture axiale 30 est large comme l'entend habituellement l'homme du métier, c'est-à-dire qu'elle n'est pas aussi étroite qu'une ouverture à goulot et est inadaptée pour déverser avec précision un contenant liquide (il est ainsi bien connu que les pots de yaourt, les gobelets, les coupelles, les pots de peinture et récipients du même genre ont une large ouverture).

Le récipient creux 3, optionnellement pourvu d'une collerette 3c à son extrémité supérieure 3d, peut présenter une portion de surface externe 31 adaptée pour recevoir une couche décorative et/ou protectrice, par exemple sous la forme d'une étiquette, un sticker ou élément analogue. On s'intéresse ici au cas d'un récipient creux 3 qui n'a pas été recouvert par ce type de couche. Cependant, le procédé est adapté pour permettre des mesures d'épaisseurs postérieurement au recouvrement par une étiquette ou couche similaire, soit du fait que cette couche est retirée (par exemple par un traitement intermédiaire à la vapeur), soit du fait que les informations de répartition d'épaisseur sont souhaitées pour un récipient creux 3 recouvert d'une telle couche.

Optionnellement, la paroi latérale 3b peut présenter une portion de surface externe 31 cylindrique et/ou une portion de surface externe 32 de profil conique ou de profil longitudinalement incurvé. Bien entendu, les guides 20 sont montés de façon à prendre en compte les éventuelles variations de section dans la paroi latérale 3b. De la même façon, le fond 3a peut présenter un retrait comme illustré sur la figure 5 et on comprend que les butées 14a sont prédisposées en prenant en compte les éventuelles différences de niveau des surfaces à engager.

L'étape 53 d'étalonnage peut être réalisée avant ou pendant l'étape 52 de récupération. On comprend qu'il s'agit d'effectuer le zéro pour chacun des capteurs, ce qui permettra de mesurer la différence de déplacement de chaque organe d'appui 21, 22, 23 par rapport au zéro. Une étape préalable de positionnement 50 peut être prévue pour amener le support de contact 10 et la structure 12 de recouvrement dans la configuration d'étalonnage. L'interface de montage 28, ici avec le chariot de coulissement 40, permet de réaliser cette étape préalable de positionnement 50. Ensuite, l'étape 53 d'étalonnage est initiée, par exemple par une sélection d'une commande correspondante sur l'écran de commande tactile 7a. Comme visible sur la figure 6, les organes d'appui mobiles 22, 23 peuvent être déplacés selon des phases de déplacement distinctes.

Ainsi en référence aux figures 1 et 6, une première phase de déplacement 53a peut concerner des premiers organes d'appui 21 (qui ici sont destinés à s'appuyer sur le fond 3a et se déplacent verticalement, parallèlement à l'axe longitudinal Z du support de contact 10, sauf dans les cas ou les surfaces du fond inspectées sont inclinées). De manière décalée dans le temps par rapport à cette première phase, une deuxième phase de déplacement 53b peut concerner des deuxièmes organes d'appui 22 qui se déplacent selon une direction transverse à l'axe longitudinal Z et sont destinés à s'appuyer sur la paroi latérale 3b. De façon similaire, une troisième phase de déplacement 53c est réalisée de la façon illustrée sur la figure 6, en déplaçant les troisièmes organes d'appui 23. Chacun de ces déplacements permet de récupérer une information de position pour la butée respective 14a, 14b et 14c en vis-à-vis (détection de la première position d'avancée de l'organe d'appui mobile considéré).

En référence à la figure 4, il est prévu d'utiliser et déplacer le récipient creux 3 récupéré de la façon suivante :
- une étape 54 d'installation du récipient creux sur l'interface de montage 28 est réalisée lorsque le support de contact 10 est à distance de la structure 12 de recouvrement, en amenant le récipient creux 3 dans une position emboîtée sur le support de contact 10, de préférence avec un ajustement en rotation à l'aide d'éléments de guidage 42a, 42b ;
- une étape 55 de positionnement est ensuite réalisée par déplacement relatif entre le support de contact 10 et la structure 12 de recouvrement, ici en déplaçant le récipient creux 3 à l'état emboîté jusque dans le logement L, sans manipulation au niveau du support de contact 10 (l'élément de préhension 29 étant pour cela décalé sur une extrémité du chariot coulissant 40 à l'opposé de la structure 12 stationnaire), de préférence en centrant le récipient creux 3 à l'aide d'éléments de guidage 41a, 41b.

La configuration de mesure effective illustrée sur la figure 1 est alors obtenue à l'issue de cette étape 55, dans cet exemple par engagement du chariot coulissant 40 sur l'organe de butée 42. On peut noter que du point de vue de l'opérateur, l'étape 55 de positionnement (avec le récipient creux 3 déjà chargé) peut être complètement similaire à l'étape 50 de positionnement.

Ensuite en conservant la configuration de mesure effective, on peut démarrer une étape (56, 57, 58) d'inspection du récipient creux 3 récupéré, au cours de laquelle les mesures d'épaisseur sont réalisées. Pour cela, on commande comme pour l'étape 53 d'étalonnage les déplacements des différents organes d'appui mobiles 21, 22, 23. On détecte ainsi la deuxième position d'avancée de l'organe d'appui mobile considéré (à noter qu'en variante, l'étape 53 d'étalonnage peut être réalisée peu après l'étape (56, 57, 58) d'inspection).

Les déplacements sont ici automatiques et permettent donc de réaliser une étape 56 de mesure complète par détection de position, avec la détermination automatique de plusieurs épaisseurs. Cette étape 56 peut se subdiviser en différentes sous-étapes 56a, 56b, 56c, avec des déplacements typiquement simultanés d'organes d'appui mobiles 21, 22 ou 23 reliés à une même interface de connexion IP1, IP2 ou IP3, respectivement. En pratique dans un mode de réalisation préféré, les étapes 56a, 56b, 56c peuvent être actionnées et se succéder de façon identique ou complètement similaire à ce qui est réalisé pour les étapes 53a, 53b, 53c.

Dans des variantes du procédé de mesure, on peut obtenir davantage de mesures d'épaisseur, par exemple en faisant pivoter d'un angle prédéfini (compris par exemple entre 5 ou 10° et 90° et/ou de l'ordre de 180°) le récipient creux 3 par rapport au support de contact 10, autour de l'axe longitudinal Z. Dans ce cas, la rotation du support de contact est réalisée entre deux cycles complets qui permettent d'aboutir chacun à l'étape 57 de récupération de données. Une étape d'étalonnage est de préférence réalisée à la fois pour le cycle qui précède la rotation et pour le cycle suivant. Lorsque des éléments de guidage 41a, 41b, 42a, 42b coopèrent avec une collerette 3c du récipient 3 qui présente quatre bords rectilignes formant un carré virtuel, il est préférable de tourner le récipient 3 autour de l'axe longitudinal Z de +90°, -90°, 180° ou une combinaison de ces possibilités.

Lorsque l'ensemble 5 de détection de position a fini de réaliser les déplacements des organes d'appui mobiles 21, 22, 23, une modification d'affichage peut être réalisée au niveau de l'interface 7 et un déchargement peut être effectué, par exemple en tirant l'organe de préhension 29. De façon automatique, l'unité de contrôle 6 traite les données collectées par les capteurs. L'écran 7b peut afficher en temps réel des informations représentant les épaisseurs mesurées. On comprend que l'étape 57 de récupération des données, obtenue ici par l'intermédiaire des interfaces de connexion IP1, IP2 et IP3 ou autre liaison adaptée, est rapide et l'opérateur peut immédiatement consulter les résultats de répartition d'épaisseur pour le récipient creux 3 qui vient d'être inspecté.

Dans un mode de réalisation, chaque épaisseur e venant d'être mesurée est soumise, lors une étape 58 de contrôle, à une comparaison avec un ou des seuils prédéfinis paramétrés sur l'appareil 1. Une routine de calcul permet alors d'afficher de manière particulière l'information d'épaisseur lorsqu'elle est en dehors de la gamme souhaitée. Optionnellement, lorsqu'au moins une épaisseur e mesurée pour le récipient creux 3 récupéré est en dehors d'une gamme bornée par le ou les seuils prédéfinis, une étape 59 d'ajustement de l'étape 51a de formage et/ou d'une étape antérieure à l'étape 51a de formage est réalisée.

L'étape d'ajustement d'un ou plusieurs paramètres de fabrication est réalisée en fonction du décalage (excès ou insuffisance d'épaisseur) détecté lors de l'étape 58 de contrôle. Ainsi, les récipients creux 3 ultérieurement fabriqués pourront présenter un corps 8 ayant au moins une épaisseur modifiée par rapport au corps du récipient récupéré et ayant été inspecté selon le procédé de mesure.

A titre d'exemple non limitatif, si un manque de matière est observé au fond 3a du récipient 3, une augmentation de la température consigne de l'étape de chauffe peut être réalisée lors du thermoformage. Une option alternative ou complémentaire peut-être de modifier la distance relative entre le fond du moule et le poinçon (plus spécifiquement de la réduire) lorsque celui-ci fini sa course.

En cas de décalage d'épaisseur observé entre deux faces ou zones opposées de la paroi latérale 3b, un recentrage du poinçon de thermoformage sera typiquement réalisé.

Le procédé permet aussi de détecter au plus tôt une modification importante de la forme globale de la courbe de répartition d'épaisseur, de sorte qu'une action de maintenance correspondant au renouvellement des poinçons peut être planifiée en conséquence.

Indépendamment du type de capteurs utilisés pour obtenir les données de mesure, on peut noter que l'utilisation d'un dispositif chargeur 2 présente des avantages pour bloquer au même endroit un support de contact 10 qui s'insère dans le volume intérieur du récipient creux 3. On s'assure ainsi que la position est inchangée entre l'étape 53 d'étalonnage et l'étape 56 de mesure.

Un des avantages de l'invention réside dans le fait de pouvoir garantir plus aisément une qualité de pot ou récipient similaire pour les consommateurs, ce qui peut permettre d'alléger les récipients 3. Les mesures sont réalisées sans rayonnement ou émission électrique dans l'espacement prédéterminé 4 servant à recevoir la portion à inspecter 8a, ce qui rend le procédé adapté pour une large gamme de parois.

Avec une prédisposition d'un guide 20 de coulissement pour chaque capteur, on s'assure que la direction de déplacement est bien perpendiculaire à la zone de surface ciblée pour une mesure efficace de l'épaisseur. On supprime ainsi une incertitude liée à une manipulation par un opérateur.

Il doit être évident pour les personnes versées dans l'art que la présente invention permet des modes de réalisation sous de nombreuses autres formes spécifiques sans l'éloigner du domaine d'application de l'invention comme revendiqué. En particulier, l'invention n'est pas limitée à des applications de mesure de récipients ayant une ouverture circulaire. On comprend que pour une ouverture ovale ou de forme proche d'un carré, le diamètre Dint peut être remplacé par une dimension caractéristique analogue. Le support de contact 10 peut alors présenter au moins des surfaces de contact opposées et/ou former une empreinte pour tout ou partie de la face interne du récipient 3 (au niveau de génératrices), ce qui permet un positionnement approprié de ce récipient 3.

Les récipients 3 peuvent correspondre à une capacité de 25 à 500g, de préférence 75 à 200g de contenant alimentaire. Dans ce cas la hauteur h3 est typiquement comprise entre 40 et 200 mm, de préférence entre 50 et 120 mm et typiquement avec une ouverture axiale 30 dont la largeur ou le diamètre Dint est supérieur ou égal à la moitié du diamètre (ou dimension analogue) du fond 3a. Cependant, le procédé de mesure est adapté aussi pour des récipients de capacités différente, par exemple de l'ordre de 1000g ou davantage.

## Revendications

1. Procédé de mesure d'épaisseur dans au moins une portion à inspecter (8a) d'un corps (8) d'un récipient creux (3), le corps (8) définissant un volume intérieur débouchant par une ouverture axiale (30), le procédé comprenant les étapes suivantes :
- récupération (52) du récipient creux (3), le corps du récipient creux récupéré comprenant un fond (3a) à l'opposé de l'ouverture axiale (30) et définissant une paroi latérale (3b) qui s'étend autour d'un axe longitudinal (A) ;
- mise en contact (54) du fond (3a) et/ou d'une face interne de la paroi latérale (3b) avec un support de contact (10) qui remplit tout ou partie du volume intérieur ;
- détermination d'une épaisseur respectivement dans N zones distinctes de la portion à inspecter (8a), par utilisation de N organes d'appui mobiles (21, 22, 23 ; 122, 123) qui sont guidés chacun par un guide (20) à orientation fixe placé dans l'un parmi le support de contact (10) et une structure (12) de recouvrement par l'extérieur du récipient creux, sachant que les N organes d'appui mobiles (21, 22, 23 ; 122, 123) sont entraînés chacun en coulissement dans le guide (20) vers :
i) une première surface de contact (S1) définie par une butée (14a, 14b, 14c) destinée au contact avec le corps du récipient creux dans une configuration d'étalonnage sans récipient creux obtenue avant ou après l'étape de mise en contact (54), ce qui permet de détecter (53) une première position d'avancée de l'organe d'appui mobile considéré ;
ii) une deuxième surface de contact (S2) définie par le corps du récipient creux, dans une configuration de mesure effective, lorsque le corps (8) du récipient creux (3) est encore en contact avec le support de contact (10), ce qui permet de détecter (56) une deuxième position d'avancée de l'organe d'appui mobile considéré, la deuxième position d'avancée étant représentative d'une épaisseur (e) du corps du récipient creux par comparaison avec la première position d'avancée ;
- commande automatique du déplacement des N organes d'appui mobiles (21, 22, 23 ; 122, 123) par une unité de contrôle (6), N étant un entier supérieur ou égal à deux.

2. Procédé de mesure selon la revendication 1, dans lequel les N organes d'appui mobiles (21, 22, 23 ; 122, 123) sont chacun déplacés sous l'effet d'un fluide pressurisé et exercent chacun sur le corps du récipient une force de contact régulée par :
- un organe de rappel élastique (25) ; et/ou
- un dispositif de régulation de la mise sous pression du fluide pressurisé ;
la portion à inspecter (8a) étant de préférence réalisée dans une matière flexible.

3. Procédé de mesure selon la revendication 1 ou 2, dans lequel le récipient creux (3), qui est dépourvu de goulot, présente une hauteur (h3) mesurée longitudinalement entre le fond (3a) et une extrémité supérieure (3d), des mesures d'épaisseur du récipient creux étant réalisées à différents niveaux de hauteur par tout ou partie des N organes d'appui mobiles (22, 23 ; 122, 123).

4. Procédé de mesure selon l'une quelconque des revendications précédentes, dans lequel N est un entier supérieur ou égal à cinq, une première phase de détection de la deuxième position d'avancée étant réalisée simultanément pour au moins deux zones appartenant au fond (3a), en déplaçant (56a) simultanément au moins deux premiers organes d'appui mobiles (21) des N organes d'appui mobiles (21, 22, 23 ; 122, 123).

5. Procédé de mesure la revendication 4, dans lequel des organes d'appui mobiles (22, 23 ; 122, 123) des N organes d'appui mobiles (21, 22, 23 ; 122, 123), distincts des premiers organes d'appui mobiles (21), sont déplacés (56b, 56c) pour réaliser au moins une autre phase de détection de la deuxième position d'avancée pour une ou plusieurs zones appartenant à la paroi latérale (3b), l'un au moins des N organes d'appui mobiles (22, 23 ; 122, 123) étant déplacé avec un décalage temporel par rapport au déplacement (56a) des premiers organes d'appui mobiles (21).

6. Procédé de fabrication de récipients creux pourvus d'un corps (8) destiné à être rempli par un contenant, comprenant une étape (51a) de formage du corps en définissant un volume intérieur débouchant par une ouverture axiale (30), et dans lequel des mesures d'épaisseur du corps sont réalisées dans différentes zones dudit corps en suivant le procédé de mesure d'épaisseur selon l'une des revendications 1 à 5, le procédé de fabrication comprenant :
- une étape (52) de récupération d'un récipient creux (3) après l'étape (51a) de formage ;
- une étape (56, 57, 58) d'inspection du récipient creux récupéré au cours de laquelle lesdites mesures d'épaisseur sont réalisées, comprenant un contrôle (58) des mesures d'épaisseur en fonction d'un ou de plusieurs seuils prédéfinis ;
- lorsqu'au moins une épaisseur mesurée du corps (8) du récipient creux (3) récupéré est en dehors d'une gamme bornée par le ou lesdits seuils, une étape (59) d'ajustement de l'étape (51a) de formage et/ou d'une étape antérieure à l'étape de formage afin de fabriquer des récipients creux dont le corps présente au moins une épaisseur modifiée par rapport au corps du récipient récupéré (3).

7. Appareil de mesure d'épaisseur pour la mise en oeuvre du procédé de mesure selon l'une quelconque des revendications 1 à 5, permettant des mesures d'épaisseur d'un récipient creux (3) ayant un corps avec un format déterminé pourvu d'un fond (3a) et d'une paroi latérale (3b), l'appareil (1) comprenant :
- un support de contact (10) destiné à s'emboîter dans le volume intérieur du récipient creux (3), le support de contact présentant une extrémité libre (10a) ; et
- un ensemble (5) de détection de position comprenant au moins un organe d'appui mobile (21, 22, 23 ; 122, 123) qui est :
i) mobile jusqu'à une première position d'avancée définie par une butée (14a, 14b, 14c) dans une configuration d'étalonnage de l'appareil de mesure ; et
ii) adapté pour venir en appui, dans une configuration de mesure effective de l'appareil de mesure, contre le corps (8) du récipient creux (3), de façon à définir une deuxième position d'avancée représentative d'une épaisseur (e) du corps du récipient creux par comparaison avec la première position d'avancée ;
**caractérisé en ce qu'**il comporte une structure (12) de recouvrement qui délimite avec le support de contact (10) un espacement prédéterminé (4) dans la configuration d'étalonnage et la configuration de mesure effective, l'espacement prédéterminé (4) étant destiné à recevoir une portion à inspecter (8a) du corps (8) du récipient creux, dans la configuration de mesure effective lorsque le corps du récipient creux est emboîté sur le support de contact (10), l'ensemble (5) de détection de position comprenant :
- un nombre N d'organes d'appui mobiles (21, 22, 23 ; 122, 123) guidés chacun par un guide (20) à orientation fixe placé dans l'un parmi le support de contact (10) et la structure (12) de recouvrement, chacun des N organes d'appui mobiles étant entraîné en coulissement dans le guide (20) vers l'espacement prédéterminé (4) dans la configuration d'étalonnage et dans la configuration de mesure effective ;
- un même nombre N de butées (14a, 14b, 14c) en correspondance avec la course desdits N organes d'appui mobiles (21, 22, 23; 122, 123) pour définir respectivement ladite première position d'avancée ; et
- une unité de contrôle (6) pour commander automatiquement le déplacement (53a, 53b, 53c ; 56a, 56b, 56c) des N organes d'appui mobiles (21, 2, 23), N étant un entier supérieur ou égal à deux.

8. Appareil de mesure selon la revendication 7, dans lequel l'un des N organes d'appui mobiles (21, 22, 23 ; 122, 123) est placé à une plus grande distance de l'extrémité libre (10a) du support de contact (10b) qu'un autre des N organes d'appui mobiles.

9. Appareil de mesure selon la revendication 7 ou 8, dans lequel dans lequel la structure (12) de recouvrement présente une première face (110) qui s'étend parallèlement à un premier plan (P1) pour recouvrir une face externe du fond et une deuxième face (120) qui s'étend depuis une extrémité proche de ou reliée à la première face jusqu'à une portion éloignée du premier plan, un organe d'appui mobile déterminé (21) des organes d'appui mobiles (21, 22, 23 ; 122, 123) étant monté coulissant selon une direction perpendiculaire au premier plan et configuré pour permettre une mesure d'épaisseur du fond (3a), l'extrémité libre (10a) du support de contact (10) présentant une butée (14a) déterminée parmi les N butées qui est en correspondance avec la course de l'organe d'appui déterminé pour définir la première position d'avancée de l'organe d'appui déterminé (21).

10. Appareil de mesure selon l'une quelconque des revendications 7 à 9, dans lequel deux des N butées (14a, 14b, 14c) sont fixes et prédisposées en fonction du format déterminé du corps (8) du récipient creux (3), de sorte que chacune de ces deux butées forme un appui localisé dans ladite portion à inspecter (8a).

11. Appareil de mesure selon l'une quelconque des revendications 7 à 10, dans lequel l'unité de contrôle (6) est configurée pour commander simultanément le déplacement d'au moins deux des N organes d'appui mobiles (21, 22, 23 ; 122, 123), respectivement dans la configuration d'étalonnage et dans la configuration de mesure effective.

12. Appareil de mesure selon l'une quelconque des revendications 7 à 11, comprenant une interface de montage (28) pourvue d'un organe de butée (B2) et reliée à la structure (12) de recouvrement, l'interface de montage (28) étant configurée pour déplacer le support de contact (10), de préférence par l'intermédiaire d'un chariot coulissant (40), entre une position distante de la structure (12) de recouvrement et une position proximale, la configuration d'étalonnage et la configuration de mesure effective étant obtenues lorsque le support de contact est dans ladite position proximale, le support de contact (10) étant bloqué dans la position proximale par l'organe de butée (B2).

13. Appareil de mesure selon la revendication 12, dans lequel le récipient creux (3) présente une collerette annulaire (3c) raccordée au corps (8) et définissant quatre côtés, l'interface de montage (28) présentant au moins deux éléments de guidage en position (41a, 41b, 42a, 42b) pour guider au moins deux côtés opposés des quatre côtés de la collerette (3c).

14. Appareil de mesure selon l'une quelconque des revendications 7 à 13, dans lequel chacun des N organes d'appui mobiles (21, 22, 23 ; 122, 123) comprend une tige de mesure (200) montée coulissante dans un guide (20) communiquant avec une source de pression pneumatique commandée par l'unité de contrôle (6).

15. Appareil de mesure selon l'une quelconque des revendications 7 à 14, dans lequel les N organes d'appui mobiles (21, 22, 23 ; 122, 123) sont répartis dans un même plan longitudinal parallèle à un axe longitudinal (X) du récipient creux (3) dans la configuration de mesure effective.

16. Appareil de mesure selon l'une quelconque des revendications 7 à 15, dans lequel chaque guide (20) à orientation fixe est monté dans la structure (12) de recouvrement qui forme une arche.

## Patentansprüche

1. Verfahren zum Messen einer Dicke in wenigstens einem zu untersuchenden Abschnitt (8a) eines Körpers (8) eines hohlen Behälters (3), wobei der Körper (8) ein inneres Volumen definiert, welches durch eine axiale Öffnung (30) mündet, wobei das Verfahren die folgenden Schritte umfasst:
- Bereitstellen (52) des hohlen Behälters (3), wobei der Körper des bereitgestellten hohlen Behälters einen Boden (3a) gegenüber der axialen Öffnung (30) umfasst und eine laterale Wand (3b) definiert, welche sich um eine longitudinale Achse (A) herum erstreckt;
- In Kontakt Bringen (54) des Bodens (3a) und/oder einer inneren Fläche der lateralen Wand (3b) mit einem Kontaktträger (10), welcher das gesamte innere Volumen oder einen Teil davon auffüllt;
- Bestimmen einer jeweiligen Dicke in N unterschiedlichen Zonen des zu untersuchenden Abschnitts (8a) unter Verwendung von N beweglichen Anlageelementen (21, 22, 23; 122, 123), welche jeweils durch eine Führung (20) mit fester Orientierung geführt sind, welche an einem aus dem Kontaktträger (10) und einer Struktur (12) zum Abdecken von der Außenseite des hohlen Behälters platziert ist, wobei die N beweglichen Anlageelemente (21, 22, 23; 122, 123) jeweils gleitend in der Führung (20) angetrieben sind, in Richtung:
i) einer ersten Kontaktfläche (S1), welche durch einen Anschlag (14a, 14b, 14c) definiert ist, welcher für einen Kontakt mit dem Körper des hohlen Behälters in einer Kalibrierungskonfiguration ohne hohlen Behälter vor oder nach dem Schritt des in Kontakt Bringens (54) vorgesehen ist, wodurch erlaubt wird, eine erste Vorschubposition des betreffenden beweglichen Anlageelements zu detektieren (53);
ii) einer zweiten Kontaktfläche (S2), welche durch den Körper des hohlen Behälters in einer tatsächlichen Messkonfiguration definiert ist, wenn der Körper (8) des hohlen Behälters (3) wieder in Kontakt mit dem Kontaktträger (10) ist, wodurch erlaubt wird, eine zweite Vorschubposition des betreffenden beweglichen Anlageelements zu detektieren (56), wobei die zweite Vorschubposition repräsentativ für eine Dicke (e) des Körpers des hohlen Behälters durch Vergleichen mit der ersten Vorschubposition ist;
- automatisches Anweisen der Verlagerung der N beweglichen Anlageelemente (21, 22, 23; 122, 123) durch eine Steuereinheit (6), wobei N eine Ganzzahl größer oder gleich zwei ist.

2. Verfahren zum Messen nach Anspruch 1, wobei die N beweglichen Anlageelemente (21, 22, 23; 122, 123) jeweils unter der Wirkung eines unter Druck gesetzten Fluids verlagert werden und jeweils auf den Körper des Behälters eine Kontaktkraft ausüben, welche reguliert wird durch:
- ein elastisches Rückstellelement (25); und/oder
- eine Vorrichtung zur Regulierung des unter Druck Setzens des unter Druck gesetzten Fluids;
wobei der zu untersuchende Abschnitt (8a) vorzugsweise aus einem flexiblen Material hergestellt ist.

3. Verfahren zum Messen nach Anspruch 1 oder 2, wobei der hohle Behälter (3), welcher frei von einer Engstelle ist, eine Höhe (h3) aufweist, gemessen longitudinal zwischen dem Boden (3a) und einem oberen Ende (3d), wobei Messungen der Dicke des hohlen Behälters in verschiedenen Höhenniveaus von allen oder einem Teil der N beweglichen Anlageelemente (22, 23; 122, 123) durchgeführt werden.

4. Verfahren zum Messen nach einem der vorhergehenden Ansprüche, wobei N eine Ganzzahl größer oder gleich fünf ist, wobei eine erste Detektionsphase der zweiten Vorschubposition gleichzeitig für wenigstens zwei dem Boden (3a) zugehörige Zonen durchgeführt wird, indem gleichzeitig wenigstens zwei erste bewegliche Anlageelemente (21) aus den N beweglichen Anlageelementen (21, 22, 23; 122, 123) verlagert werden (56a).

5. Verfahren zum Messen nach Anspruch 4, wobei die beweglichen Anlageelemente (22, 23; 122, 123) aus den N beweglichen Anlageelementen (21, 22, 23; 122, 123), welche verschieden von den ersten beweglichen Anlageelementen (21) sind, verlagert werden (56b, 56c), um wenigstens eine weitere Detektionsphase der zweiten Vorschubposition für eine oder mehrere der lateralen Wand (3b) zugehörige Zonen durchzuführen, wobei das wenigstens eine aus den N beweglichen Anlageelementen (22, 23; 122, 123) mit einer zeitlichen Verschiebung gegenüber der Verlagerung (56a) der ersten beweglichen Anlageelemente (21) verlagert wird.

6. Verfahren zum Herstellen von hohlen Behältern, welche mit einem Körper (8) versehen sind, welcher dazu vorgesehen ist, mit einem Inhalt gefüllt zu werden, umfassend einen Schritt (51a) eines Bildens des Körpers, indem ein inneres Volumen definiert wird, welches durch eine axiale Öffnung (30) mündet, und wobei Messungen der Dicke des Körpers in unterschiedlichen Zonen des Körpers dem Verfahren zum Messen der Dicke nach einem der Ansprüche 1 bis 5 folgend durchgeführt werden, wobei das Verfahren zum Herstellen umfasst:
- einen Schritt (52) eines Bereitstellens eines hohlen Behälters (3) nach dem Schritt (51a) des Bildens;
- einen Schritt (56, 57, 58) eines Untersuchens des bereitgestellten hohlen Behälters, in dessen Verlauf die Messungen der Dicke durchgeführt werden, umfassend eine Kontrolle (58) der Messungen der Dicke als Funktion von einem oder mehreren vordefinierten Schwellenwerten;
- falls wenigstens eine gemessene Dicke des Körpers (8) des bereitgestellten hohlen Behälters (3) außerhalb eines Bereichs liegt, welcher durch den oder die Schwellenwert/e beschränkt ist, einen Schritt (59) eines Anpassens des Schritts (51a) des Bildens und/oder eines Schritts vor dem Schritt des Bildens, um hohle Behälter herzustellen, deren Körper wenigstens eine Dicke aufweist, welche hinsichtlich des Körpers des bereitgestellten Behälters (3) modifiziert ist.

7. Vorrichtung zum Messen der Dicke zum Durchführen des Verfahrens nach einem der Ansprüche 1 bis 5, welches Messungen der Dicke eines hohlen Behälters (3) erlaubt, welcher einen Körper mit einem vorbestimmten Format aufweist, versehen mit einem Boden (3a) und einer lateralen Wand (3b), wobei die Vorrichtung (1) umfasst:
- einen Kontaktträger (10), welcher dazu vorgesehen ist, in das innere Volumen des hohlen Behälters (3) einzupassen, wobei der Kontaktträger ein freies Ende (10a) aufweist; und
- eine Anordnung (5) zum Detektieren einer Position, umfassend wenigstens ein bewegliches Anlageelement (21, 22, 23; 122, 123), welches:
i) bis zu einer ersten Vorschubposition beweglich ist, welche durch einen Anschlag (14a, 14b, 14c) definiert ist, in einer Kalibrierungskonfiguration der Vorrichtung zum Messen; und
ii) dazu eingerichtet ist, in einer tatsächlichen Messkonfiguration der Vorrichtung zum Messen gegen den Körper (8) des hohlen Behälters (3) derart in Anlage zu kommen, dass eine zweite Vorschubposition definiert wird, welche repräsentativ für eine Dicke (e) des Körpers des hohlen Behälters durch Vergleichen mit der ersten Vorschubposition ist;
**dadurch gekennzeichnet, dass** sie eine Struktur (12) zum Bedecken umfasst, welche mit dem Kontaktträger (10) einen vorbestimmten Abstand (4) in der Kalibrierungskonfiguration und der tatsächlichen Messkonfiguration begrenzt, wobei der vorbestimmte Raum (4) dazu vorgesehen ist, einen zu untersuchenden Abschnitt (8a) des Körpers (8) des hohlen Behälters in der tatsächlichen Messkonfiguration aufzunehmen, wenn der Körper des hohlen Behälters an dem Kontaktträger (10) eingefügt ist, wobei die Anordnung (5) zum Detektieren einer Position umfasst:
- eine Anzahl N von beweglichen Anlageelementen (21, 22, 23; 122, 123), welche jeweils durch eine Führung (20) mit fester Orientierung geführt sind, welche in einem aus dem Kontaktträger (10) und der Struktur (12) zum Abdecken platziert ist, wobei jedes der N beweglichen Anlageelemente gleitend in der Führung (20) in Richtung des vorbestimmten Abstands (4) in der Kalibrierungskonfiguration und der tatsächlichen Messkonfiguration angetrieben ist;
- eine gleiche Anzahl N von Anschlägen (14a, 14b, 14c) in Übereinstimmung mit dem Weg der N beweglichen Anlageelemente (21, 22, 23; 122, 123) zum jeweiligen Definieren der ersten Vorschubposition; und
- eine Steuereinheit (6) zum automatischen Anweisen der Verlagerung (53a, 53b, 53c; 56a, 56b, 56c) der N beweglichen Anlageelemente (21, 2, 23), wobei N eine Ganzzahl größer oder gleich zwei ist.

8. Vorrichtung zum Messen nach Anspruch 7, wobei das eine der N beweglichen Anlageelemente (21, 22, 23; 122, 123) in größerer Distanz von dem freien Ende (10a) des Kontaktträgers (10b) platziert ist als ein anderes der N beweglichen Anlageelemente.

9. Vorrichtung zum Messen nach Anspruch 7 oder 8, wobei die Struktur (12) zum Bedecken eine erste Fläche (110), welche sich parallel zu einer ersten Ebene (P1) erstreckt, um eine äußere Fläche des Bodens zu bedecken, sowie eine zweite Fläche (120) aufweist, welche sich von einem Ende nahe bei oder verbunden mit der ersten Fläche bis zu einem verlängerten Abschnitt der ersten Ebene erstreckt, wobei ein vorbestimmtes bewegliches Anlageelement (21) aus den beweglichen Anlageelementen (21, 22, 23; 122, 123) gleitend bezüglich einer Richtung senkrecht zu der ersten Ebene montiert ist und dazu eingerichtet ist, eine Messung der Dicke des Bodens (3a) zu erlauben, wobei das freie Ende (10a) des Kontaktträgers (10) einen vorbestimmten Anschlag (14a) aus den N Anschlägen in Entsprechung mit dem Weg des vorbestimmten Anlageelements aufweist, um die erste Vorschubposition des vorbestimmten Anlageelements (21) zu definieren.

10. Vorrichtung zum Messen nach einem der Ansprüche 7 bis 9, wobei zwei der N Anschläge (14a, 14b, 14c) als Funktion des vorbestimmten Formats des Körpers (8) des hohlen Behälters (3) befestigt und vorangeordnet sind, so dass jeder dieser beiden Anschläge einen Anschlag bildet, welcher in dem zu untersuchenden Abschnitt (8a) positioniert ist.

11. Vorrichtung zum Messen nach einem der Ansprüche 7 bis 10, wobei die Steuereinheit (6) dazu eingerichtet ist, gleichzeitig die Verlagerung von wenigstens zwei der N beweglichen Anlageelemente (21, 22, 23; 122, 123) anzuweisen, jeweils in der Kalibrierungskonfiguration und der tatsächlichen Messkonfiguration.

12. Vorrichtung zum Messen nach einem der Ansprüche 7 bis 11, umfassend eine Schnittstelle für eine Montage (28), welche mit einem Anschlagelement (B2) versehen und an der Struktur (12) zum Bedecken angebracht ist, wobei die Schnittstelle für eine Montage (28) dazu eingerichtet ist, den Kontaktträger (10) zu verlagern, vorzugsweise mittels eines gleitenden Schlittens (40), zwischen einer Position entfernt von der Struktur (12) zum Bedecken und einer proximalen Position, wobei die Kalibrierungskonfiguration und die tatsächliche Messkonfiguration erhalten werden, wenn der Kontaktträger in der proximalen Position ist, wobei der Kontaktträger (10) in der proximalen Position durch das Anschlagelement (B2) blockiert ist.

13. Vorrichtung zum Messen nach Anspruch 12, wobei der hohle Behälter (3) einen ringförmigen Kragen (3c) aufweist, welcher mit dem Körper (8) verbunden ist und vier Seiten definiert, wobei die Schnittstelle für eine Montage (28) wenigstens zwei Elemente zum Führen in Position (41a, 41b, 42a, 42b) aufweist, um wenigstens zwei gegenüberliegende Seiten aus den vier Seiten des Kragens (3c) zu führen.

14. Vorrichtung zum Messen nach einem der Ansprüche 7 bis 13, wobei jedes der N beweglichen Anlageelemente (21, 22, 23; 122, 123) eine Messstange (200) umfasst, welche gleitend in einer Führung (20) montiert ist, welche mit einer pneumatischen Druckquelle kommuniziert, welche durch die Steuereinheit (6) angewiesen wird.

15. Vorrichtung zum Messen nach einem der Ansprüche 7 bis 14, wobei die N beweglichen Anlageelemente (21, 22, 23; 122, 123) in einer gleichen longitudinalen Ebene parallel zu einer longitudinalen Achse (X) des hohlen Behälters (3) in der tatsächlichen Messkonfiguration verteilt sind.

16. Vorrichtung zum Messen nach einem der Ansprüche 7 bis 15, wobei jede Führung (20) mit fester Orientierung in der Struktur (12) zum Abdecken montiert ist, welche einen Bogen bildet.

## Claims

1. Method for measuring thickness in at least one section to inspect (8a) of a body (8) of a hollow container (3), the body (8) defining an internal volume leading to an axial opening (30), the method comprising the following steps:
- recovery (52) of the hollow container (3), the body of the recovered hollow container comprising a bottom (3a) opposite the axial opening (30) and defining a lateral wall (3b) which extends around a longitudinal axis (A);
- contacting (54) the bottom (3a) and/or an internal face of the lateral wall (3b) with a contact support (10) which fills all or part of the internal volume;
- determination of a thickness respectively in N separate areas which are part of the section to inspect (8a), by using N mobile support members (21, 22, 23; 122, 123) that are each guided by a set orientation guide (20) positioned in one among the contact support (10) and an exterior coverage structure (12) covering the hollow container, knowing that the N mobile support members (21, 22, 23; 122, 123) are each slid into the guide (20) towards:
i) a first contact surface (S1) defined by a stopper (14a, 14b, 14c) intended to be in contact with the body of the hollow container in a calibration configuration without the hollow container obtained before or after the contacting step (54), so as to detect (53) a first forward position of the mobile support member in question;
ii) a second contact surface (S2) defined by the body of the hollow container, in an actual measurement configuration, when the body (8) of the hollow container (3) is again in contact with the contact support (10), so as to detect (56) a second forward position of the mobile support member in question, the second forward position being representative of a thickness (e) of the body of the hollow container compared with the first forward position;
- automatic control of the movement of the N mobile support members (21, 22, 23; 122, 123) by a control unit (6), N being an integer higher than or equal to two.

2. Measuring method according to claim 1, wherein the N mobile support members (21, 22, 23; 122, 123) are each moved under the effect of a pressurised fluid and each exerting a contact force on the body of the container, regulated by:
- an elastic return member (25); and/or
- a device for regulating the pressurising of the pressurised fluid;
the section to inspect (8a) preferably being made from a flexible material.

3. Measuring method according to claim 1 or 2, wherein the hollow container (3), which has no neck, has a height (h3) measured longitudinally between the bottom (3a) and a top end (3d), measurements of thickness of the hollow container being taken at different height levels by all or part of the N mobile support members (22, 23; 122, 123).

4. Measuring method according to any one of the preceding claims, wherein N is an integer higher than or equal to five, a first phase for detecting the second forward position being carried out simultaneously for at least two areas belonging to the bottom (3a), by simultaneously moving (56a) at least two first mobile support members (21) from the N mobile support members (21, 22, 23; 122, 123).

5. Measuring method according to claim 4, wherein mobile support members (22, 23; 122, 123) from the N mobile support members (21, 22, 23; 122, 123), separate from the first mobile support members (21), are moved (56b, 56c) to carry out at least one other phase for detecting the second forward position for one or several areas belonging to the lateral wall (3b), at least one of the N mobile support members (22, 23; 122, 123) being moved with a time difference in relation to the movement (56a) of the first mobile support members (21).

6. Method for manufacturing hollow containers provided with a body (8) intended to be filled by a content, comprising a step (51a) for forming the body by defining an internal volume leading to an axial opening (30), and wherein measurements of thickness of the body are taken in different areas of said body, by following the method for measuring the thickness according to one of the claims 1 to 5, the manufacturing method comprising:
- a step (52) for recovering a hollow container (3) after the forming step (51a);
- a step (56, 57, 58) for inspecting the recovered hollow container, during which said measurements of thickness are taken, comprising a control (58) of the measurements of thickness according to one or several predefined thresholds;
- when at least one thickness measured of the body (8) of the recovered hollow container (3) is outside of a range limited by said threshold(s), an adjustment step (59) of the forming step (51a) and/or a step prior to the forming step, in order to manufacture hollow containers, of which the body has at least one modified thickness, in relation to the body of the recovered container (3).

7. Equipment for measuring thickness for the implementation of the measuring method according to any one of the claims 1 to 5, enabling measurements of the thickness of a hollow container (3) that has a body with a determined format provided with a bottom (3a) and a lateral wall (3b), the equipment (1) comprising:
- a contact support (10) intended to be slotted into the internal volume of the hollow container (3), the contact support having a free end (10a); and
- a position detection unit (5) comprising at least one mobile support member (21, 22, 23; 122, 123) which is:
i) mobile up to a first forward position defined by a stopper (14a, 14b, 14c) in a calibration configuration of the measuring equipment; and
ii) adapted for bearing, in an actual measurement configuration of the measuring equipment, against the body (8) of the hollow container (3), so as to define a second forward position representative of a thickness (e) of the body of the hollow container compared with the first forward position;
**characterised in that** it comprises a coverage structure (12) which defines with a contact support (10), a predetermined space (4) in the calibration configuration and the actual measurement configuration, the predetermined space (4) being intended to receive a section to inspect (8a) of the body (8) of the hollow container, in the actual measurement configuration when the body of the hollow container is slotted onto the contact support (10), the position detection unit (5) comprising:
- a number N of mobile support members (21, 22, 23; 122, 123) each guided by a set orientation guide (20) positioned in one among the contact support (10) and the coverage structure (12), each one of the N mobile support members being slid into the guide (20) towards the predetermined space (4) in the calibration configuration and in the actual measurement configuration;
- a same number N of stoppers (14a, 14b, 14c) corresponding to the path of said N mobile support members (21, 22, 23; 122, 123) to respectively define said first forward position; and
- a control unit (6) to automatically control the movement (53a, 53b, 53c; 56a, 56b, 56c) of the N mobile support members (21, 2, 23), N being an integer higher than or equal to two.

8. Measuring equipment according to claim 7, wherein one of the N mobile support members (21, 22, 23; 122, 123) is positioned at a greater distance from the free end (10a) of the contact support (10b) than another of the N mobile support members.

9. Measuring equipment according to claim 7 or 8, wherein the coverage structure (12) has a first face (110) which extends parallel to a first plane (P1) to cover an external face of the bottom and a second face (120) which extends from an end close to or connected to the first face, up to a section distant from the first plane, a mobile determined support member (21) from the mobile support members (21, 22, 23; 122, 123) being configured to slide along a direction perpendicular to the first plane and to enable a measurement of the thickness of the bottom (3a), the free end (10a) of the contact support (10) having a determined stopper (14a), among the N stoppers, which corresponds to the path of the determined support member to define the first forward position of the determined support member (21).

10. Measuring equipment according to any one of the claims 7 to 9, wherein two of the N stoppers (14a, 14b, 14c) are static and pre-positioned according to the determined format of the body (8) of the hollow container (3), so that each one of these two stoppers forms a localised support in said section to inspect (8a).

11. Measuring equipment according to any one of the claims 7 to 10, wherein the control unit (6) is configured to simultaneously control the movement of at least one of the N mobile support members (21, 22, 23; 122, 123), respectively in the calibration configuration and in the actual measurement configuration.

12. Measuring equipment according to any one of the claims 7 to 11, comprising a mounting interface (28) provided with a stopper body (B2) and connected to the coverage structure (12), the mounting interface (28) being configured to move the contact support (10), preferably by the intermediary of a sliding drawer (40), between a position distant from the coverage structure (12) and a proximal position, the calibration configuration and the actual measurement configuration being obtained when the contact support is in said proximal position, the contact support (10) being blocked in the proximal position by the stopper body (B2).

13. Measuring equipment according to claim 12, wherein the hollow container (3) has an annular collar (3c) connected to the body (8) and defining four sides, the mounting interface (28) having at least two positional guiding elements (41a, 41b, 42a, 42b) to guide at least two opposite sides of the four sides of the collar (3c).

14. Measuring equipment according to any one of the claims 7 to 13, wherein each one of the N mobile support members (21, 22, 23; 122, 123) comprises a measuring rod (200) mounted sliding into a guide (20) communicating with a pneumatic pressure source controlled by the control unit (6).

15. Measuring equipment according to any one of the claims 7 to 14, wherein the N mobile support members (21, 22, 23; 122, 123) are spread out in one same longitudinal plane parallel to a longitudinal axis (X) of the hollow container (3) in the actual measurement configuration.

16. Measuring equipment according to any one of the claims 7 to 15, wherein each set orientation guide (20) is mounted in the coverage structure (12) which forms an arch.
